# DEMANDE DE BREVET EUROPEEN

(11) **EP 2 253 202 A1**
(43) Date de publication de la demande: **24.11.2010**
(21) Numéro de dépôt: 10305525.7
(22) Date de dépôt: 18.05.2010
(51) Int. Cl.: A01K 7/06

(54) **Abreuvoir pour bétail à mecanisme d'alimentation en eau équipé d'un filtre**

(30) Priorité: 18.05.2009 FR 0902388
(71) Demandeur: Polymoule, 72550 Coulans sur Gee (FR)
(72) Inventeur: Cosnet, Gilbert, 72550, DEGRE (FR)
(74) Mandataire: Michelet, Alain

(57) **Abrégé**

Cet abreuvoir pour bétail est du type comprenant un bol (2) muni de moyens de fixation (3) sur un support et de moyens (4) pour assurer son alimentation en eau, lesquels moyens d'alimentation en eau (4) comprennent un corps (5) définissant une conduite interne d'alimentation (6), lequel corps (5) est équipé, au niveau de son extrémité arrière, d'un dispositif de raccordement à une tubulure d'amenée d'eau, au niveau de son extrémité avant d'un dispositif de manoeuvre (11), et entre les deux d'un organe de filtration (12).

Conformément à l'invention, le corps d'alimentation (5) comporte un orifice (40) dont l'axe (41) s'étend perpendiculairement à l'axe (6') de la conduite interne (6), lequel orifice (40) débouche extérieurement et s'étend jusqu'à ladite conduite interne (6), ledit organe de filtration (12) étant placé dans l'encombrement de la section de ladite conduite interne (6) et comportant une embase support (43) positionnée au travers dudit orifice (40) et maintenue dans ce dernier, ladite embase support (43) comportant une tête (45) équipée d'une empreinte de manoeuvre (46).

## Description

La présente invention concerne les abreuvoirs pour le bétail.

Elle concerne plus particulièrement un abreuvoir du genre comprenant un bol muni de moyens de fixation sur un support et de moyens pour assurer son alimentation en eau, lesquels moyens d'alimentation en eau comprennent un corps définissant une conduite interne d'alimentation, lequel corps est équipé, au niveau de son extrémité arrière, d'un dispositif de raccordement à une tubulure d'amenée d'eau, et au niveau de son extrémité avant, d'un dispositif de manoeuvre, lesquels moyens d'alimentation en eau comportent encore un organe de filtration ménagé en amont dudit dispositif de manoeuvre, pour éviter que les impuretés atteignent ce dernier.

Une telle structure d'abreuvoir est par exemple décrite dans les documents FR-2 668 890 ou encore FR-2 774 552.

Dans ces deux documents, un filtre est prévu au sein du dispositif de raccordement ménagé au niveau de l'extrémité arrière du corps d'alimentation, en amont d'un dispositif de réglage de débit porté par ledit corps d'alimentation.

Cet agencement particulier complique la structure des moyens d'alimentation en eau. De plus, le nettoyage du filtre nécessite la fermeture générale du réseau d'eau ou l'installation d'une vanne au niveau de chaque abreuvoir. Un autre inconvénient majeur est qu'il est difficile d'effectuer un nettoyage du film ou un réglage de débit sans outil.

Les documents FR-2 578 149 et GB-371 570 présentent des abreuvoirs avec un organe de filtration placé sur la conduite interne du corps d'alimentation ; mais, là encore, ces organes de filtration ne sont pas facilement accessibles, et ils nécessitent diverses opérations de démontage pour y accéder.

D'autre part, le document US-1 945 491 décrit un système de filtre pour les usines de filtration assurant l'enlèvement des matières solides dans une eau chargée en de telles matières.

Ce système de filtre comprend un cylindre perforé, logé dans une chambre d'accueil connectée à - une tubulure d'arrivée d'eau chargée, connectée à une vanne, - une tubulure de sortie des matières solides, associée à une vanne, et - une tubulure de sortie d'eau, associée à une vanne.

Le cylindre perforé est associé à un tamis rapporté maintenu en place par des bandes de cloisonnement fixées au moyen de vis à main ; l'ensemble cylindre perforé/tamis est écarté de la paroi interne de la chambre d'accueil pour définir une couronne externe de rétention des matières solides

Le cylindre perforé est en outre monté rotatif autour de son axe, et il est manoeuvrable au moyen d'une poignée externe de manière à permettre un positionnement des bandes de cloisonnement adapté pour assurer le nettoyage du filtre.

Il s'agit ici d'un système de filtration très complexe et nécessairement volumineux qui ne peut pas être envisagé au niveau du corps d'alimentation d'un abreuvoir pour le bétail.

La présente invention propose de remédier aux inconvénients précités des abreuvoirs pour le bétail.

Pour cela, l'abreuvoir selon l'invention est du type comprenant un bol muni de moyens de fixation sur un support et de moyens pour assurer son alimentation en eau, lesquels moyens d'alimentation en eau comprennent un corps définissant une conduite interne d'alimentation, lequel corps est équipé, au niveau de son extrémité arrière, d'un dispositif de raccordement à une tubulure d'amenée d'eau, et au niveau de son extrémité avant d'un dispositif de manoeuvre, et lesquels moyens d'alimentation en eau comportent encore un organe de filtration, ménagé en amont dudit dispositif de manoeuvre, pour éviter que les impuretés indésirables atteignent ce dernier ; et cet abreuvoir est caractérisé par le fait que ledit corps d'alimentation comporte un orifice dont l'axe s'étend perpendiculairement à l'axe de la conduite interne, lequel orifice débouche extérieurement et s'étend jusqu'à ladite conduite interne, ledit organe de filtration étant placé dans l'encombrement de la section de ladite conduite interne et comportant une embase support positionnée au travers dudit orifice et maintenue dans ce dernier, ladite embase support comportant une tête équipée d'une empreinte de manoeuvre.

De préférence, l'orifice qui assure le positionnement de l'organe de filtration débouche au niveau de la partie supérieure du corps d'alimentation.

Selon une forme de réalisation particulière, le corps d'alimentation présente une section générale rectangulaire, munie de deux faces latérales, d'une face de dessus et d'une face de dessous, et l'orifice de positionnement de l'embase de l'organe de filtration débouche au niveau de ladite face de dessus du corps d'alimentation.

Selon encore une autre particularité, l'organe de filtration comporte un cylindre filtrant dont l'axe s'étend perpendiculairement à l'axe de la conduite interne et dont le diamètre est supérieur au diamètre de ladite conduite interne, ledit cylindre filtrant étant muni d'une pluralité d'orifices ou de perforations (dont les dimensions sont adaptées pour permettre le passage de l'eau tout en retenant les impuretés indésirables).

Toujours selon l'invention, l'organe de filtration est réalisé monobloc avec son embase, cette dernière étant munie d'un moyen de fixation étanche dans l'orifice de positionnement.

L'embase de l'organe de filtration est avantageusement munie d'une collerette d'appui surmontée par une tête équipée d'une empreinte de manoeuvre, laquelle embase est associée à un joint d'étanchéité annulaire ménagé sous ladite collerette d'appui, et comporte un filetage pour son vissage dans l'orifice de positionnement muni d'un taraudage complémentaire.

Selon encore une caractéristique de l'invention, l'abreuvoir comporte un dispositif de réglage de débit positionné dans la conduite interne du corps d'alimentation, en amont de l'organe de filtration. Cette particularité permet en particulier le changement ou le nettoyage de l'organe de filtration sans avoir besoin de stopper le réseau général d'alimentation en eau (le dispositif de réglage de débit est pour cela placé en position de fermeture), ou sans avoir besoin de placer une vanne complémentaire par abreuvoir sur le réseau d'amenée d'eau.

Selon une forme de réalisation particulière, le dispositif de réglage de débit est positionné au travers d'un orifice ménagé dans le corps d'alimentation, lequel orifice comporte un axe qui s'étend perpendiculairement à l'axe de la conduite interne d'alimentation, et lequel orifice débouche extérieurement au niveau de la partie supérieure dudit corps d'alimentation, en amont de l'orifice de réception de l'organe de filtration avec son embase, et s'étend jusqu'à ladite conduite interne. De plus, le dispositif de réglage de débit consiste en un cylindre - dont l'axe s'étend perpendiculairement à l'axe de ladite conduite interne, et - qui est muni d'au moins une ouverture ; ce cylindre est porté par une embase réalisée monobloc, comportant une collerette d'appui surmontée par une tête munie d'une empreinte de manoeuvre ; cette embase comporte encore des moyens permettant sa fixation étanche dans ledit orifice, tout en autorisant son démontage et le réglage en orientation de ladite ouverture, pour assurer un réglage du débit d'eau au niveau de ladite conduite interne d'alimentation, entre deux positions de fin de course : l'une de débit maximum et l'autre de fermeture de débit.

Selon encore une autre particularité, la face de dessus du corps d'alimentation comporte une bordure en saillie entourant au moins partiellement la tête de l'organe de filtration et éventuellement la tête du dispositif de réglage de débit, qui s'étendent en saillie, en particulier pour limiter les risques de détérioration ou de déréglage par les animaux.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective d'un abreuvoir conforme à l'invention avec son bol équipé des moyens d'alimentation en eau ;
- la figure 2 est une vue en coupe selon 2-2- de la figure 1 ;
- la figure 3 est une vue en coupe longitudinale des moyens d'alimentation en eau de l'abreuvoir illustré sur les figures 1 et 2, sans le bol d'abreuvoir ;
- la figure 4 montre le corps des moyens d'alimentation en eau de la figure 3, vu en perspective avec une coupe longitudinale sur la conduite d'alimentation, et avec l'organe de filtration ainsi que le dispositif de réglage de débit retirés de leurs orifices d'accueil respectifs.

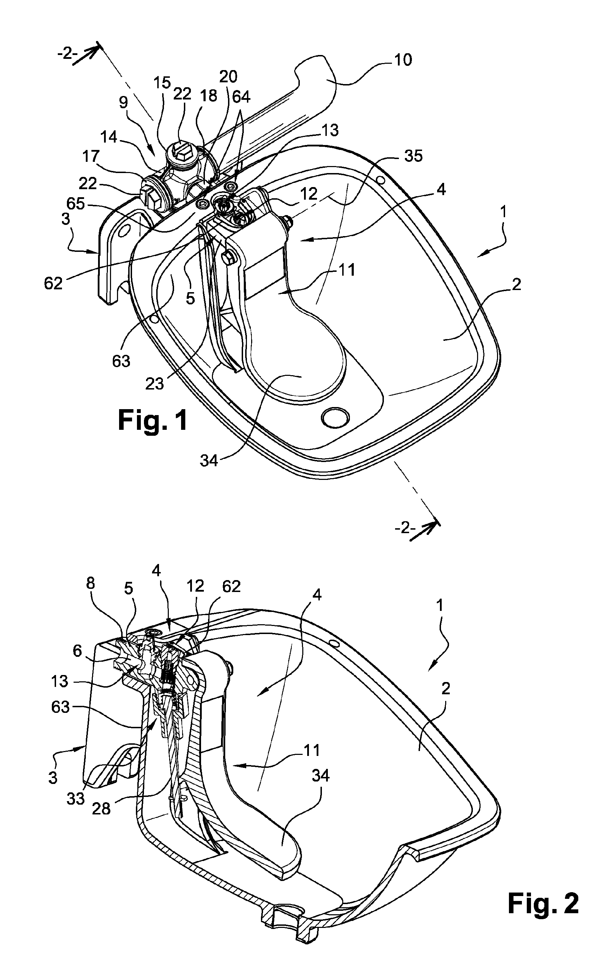

L'abreuvoir 1 illustré sur les figures 1 et 2 comprend un bol 2 réalisé en fonte ou en matière plastique moulée muni :
- de moyens monobloc 3 pour sa fixation sur un support, par exemple un mur, et
- de moyens 4 pour assurer son alimentation en eau.

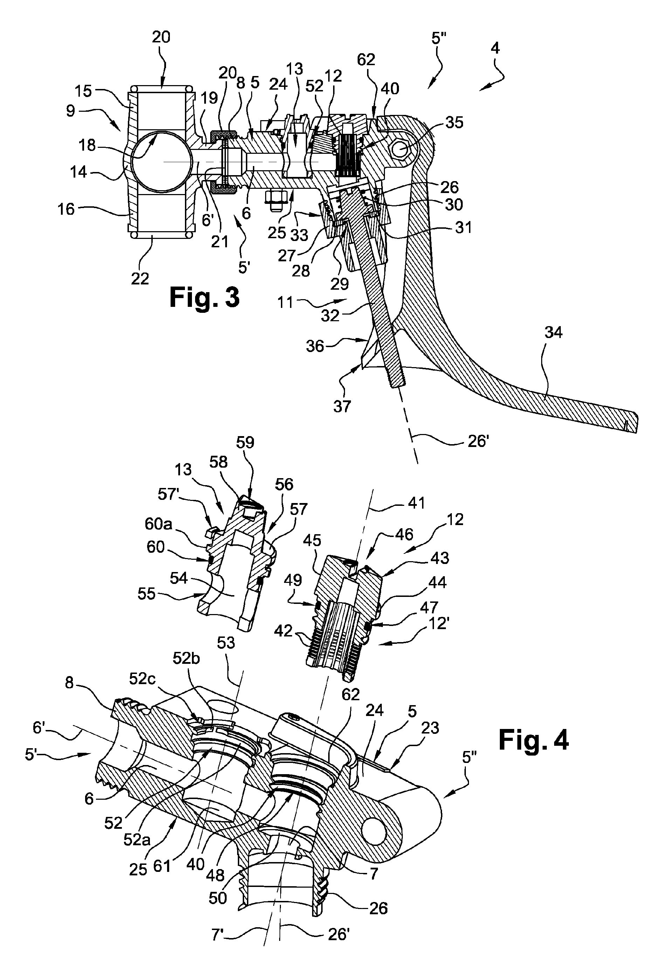

Ces moyens 4 pour l'alimentation en eau sont détaillés sur les figures 3 et 4.

Ils consistent en un corps d'alimentation 5, au sein duquel est ménagée une conduite interne 6, équipée, en amont, c'est-à-dire du côté de son extrémité arrière 5', d'un manchon fileté 8 sur lequel vient se visser un dispositif 9 pour le raccordement à une tubulure d'amenée d'eau 10 et, en aval, c'est-à-dire du côté de son extrémité avant 5", d'un dispositif de manoeuvre 11.

Le corps d'alimentation 5 comporte également un organe de filtration 12 placé sur la conduite interne 6 et agencé pour éviter que les impuretés indésirables atteignent le dispositif de manoeuvre 11.

En outre, en amont de l'organe de filtration 12, le corps d'alimentation 5 comporte encore un dispositif de réglage de débit 13 pour permettre de régler à volonté le débit d'eau au niveau du dispositif de manoeuvre 11, entre une position de fermeture et une position de débit maximum.

Le dispositif de raccordement 9 comprend ici un corps 14 en forme générale de croix qui comporte quatre tubulures d'alimentation 15, 16, 17 et 18 et une tubulure de sortie 19.

La tubulure de sortie 19 vient se connecter sur le manchon fileté 8 du corps d'alimentation 5, par l'intermédiaire d'un écrou 20 monté fou, associé à un joint d'étanchéité 21.

Les tubulures d'alimentation du corps en croix 14 qui ne sont pas raccordées à la ou aux tubulures d'amenée d'eau 10 sont obturées par des bouchons 22.

Le corps d'alimentation 5 consiste en une pièce allongée, ici de section globalement rectangulaire avec deux faces latérales 23, une face de dessus 24 et une face de dessous 25.

La conduite interne 6 s'étend selon un axe 6', depuis le manchon fileté 8, pratiquement sur toute la longueur du corps 5. Au niveau de l'extrémité avant 5", cette conduite 6 s'étend vers le bas, pour déboucher au travers de la face de dessous 25, par un orifice 7, d'axe 7' perpendiculaire à l'axe 6' de ladite conduite 6. L'orifice 7 se prolonge par une sortie tubulaire 26, filetée extérieurement, dont l'axe 26' est légèrement incliné vers l'avant, par rapport à la verticale, du haut vers le bas.

Le dispositif de manoeuvre 11 est du type à obturateur mobile 27 coopérant avec un siège 28 délimitant un orifice 29 ; il est associé à - un ressort de rappel 30, - un joint d'étanchéité 31, et - une tige de commande 32 en saillie vers le bas.

Le siège 28 et l'orifice 29 au travers duquel s'étend la tige de commande 32, sont ménagés dans un manchon 33 vissé sur la sortie tubulaire 26 ; ce manchon 33 permet le maintien de l'ensemble obturateur 27, ressort 30, joint 31 et tige 32 sur le corps d'alimentation 5.

L'obturateur 27 et la tige de commande 32 sont ici réalisés monobloc.

La tige de commande 32 s'étend sur l'axe 26' de la sortie 26 et dans le plan médian du corps d'alimentation 5. Elle est inclinée vers l'avant par rapport à la verticale, du haut vers le bas, par exemple selon un angle compris entre 5 et 30°.

Cette tige de commande 32 est manoeuvrée par une palette 34 qui est montée articulée autour d'un axe horizontal 35 au niveau de l'extrémité avant 5" du corps d'alimentation 5.

La palette 34 se prolonge vers l'arrière par un talon 36 muni d'une réservation 37 dans laquelle vient se loger la tige de commande 32.

On comprend qu'un appui sur la palette 34 entraîne le basculement de la tige de commande 32 et l'ouverture de l'obturateur mobile 27 qui assure alors l'alimentation en eau du bol d'abreuvoir 2.

Le ressort spirale 30 assure un retour automatique - de l'obturateur 27 en position de fermeture de l'orifice 29, et - de la palette 34 en position inactive (par la poussée de la tige de commande 32).

Dans une variante de réalisation, la palette 34 peut être remplacée par un tube enfilé sur l'axe 32 et maintenu par tout moyen approprié.

L'organe de filtration 12 consiste en une pièce démontable logée dans un orifice 40 ménagé à partir de la face de dessus 24 du corps d'alimentation 5 et qui débouche dans sa conduite interne 6. Le démontage en question peut en particulier être réalisé sans outillage.

L'axe 41 de cet orifice 40 s'étend perpendiculairement à l'axe général 6' de la conduite interne 6, et en regard de l'orifice de sortie 7.

Cet organe de filtration 12 comprend un cylindre filtrant 12' muni d'une pluralité de perforations ou d'ouvertures 42 dont les dimensions sont adaptées à celles des particules que l'on souhaite retenir ; l'une des extrémités de ce cylindre 12' est ouverte, et son autre extrémité se prolonge par une embase support 43 qui est munie de moyens permettant sa fixation étanche dans l'orifice de positionnement 40.

Pour cela, comme on peut le voir sur la figure 4, l'embase 43 comporte une collerette circulaire 44 destinée à venir prendre appui sur la face de dessus du corps d'alimentation 5 ; cette collerette d'appui 44 est surmontée par une tête 45 munie d'une empreinte de manoeuvre 46, ici en forme de rainure transversale. Sous la collerette 44, l'embase 43 comporte un filetage 47 destiné à coopérer avec un filetage complémentaire 48 ménagé dans l'orifice 40.

Un joint annulaire 49, positionné sous la collerette d'appui 44 et au-dessus du filetage 47 assure l'étanchéité.

Le cylindre filtrant 12' de l'organe de filtration 12 est correctement positionné dans la conduite 6 en fin de vissage de l'embase 43 dans l'orifice taraudé 40, 48. La collerette 44 vient en appui sur le dessus du corps d'alimentation 5 et la bordure libre inférieure du cylindre 12' vient en appui contre un siège 50 bordant l'orifice 7 ménagé à l'extrémité de la conduite 6, qui débouche dans la sortie tubulaire 26.

En position sur la conduite 6, le cylindre filtrant 12' s'étend sur un axe parallèle à l'axe 41 de l'orifice 40 et qui est perpendiculaire à l'axe 6' de la conduite 6 ; le diamètre du filtre 12' est supérieur au diamètre de la conduite interne 6 (sur la zone de positionnement de l'organe de filtration 12) de manière à assurer une filtration totale.

Le cylindre filtrant 12' et l'embase 43 sont réalisés monobloc par moulage de matière plastique (polyéthylène ou ABS par exemple).

Un tel organe de filtration 12, très accessible, peut être enlevé et repositionné très facilement, sans outil (ou avec un simple tournevis si nécessaire).

Le dispositif de réglage de débit 13 consiste également en une pièce démontable logée dans un orifice 52 ménagé à partir de la face de dessus 25 du corps d'alimentation 5 et qui débouche dans la conduite 6. Le démontage en question peut en particulier être réalisé sans outil.

Cet orifice 52 est placé en amont de l'orifice de positionnement 40 de l'organe de filtration 12 (entre cet orifice 40 et le manchon fileté 8) ; son axe 53 s'étend perpendiculairement à l'axe 6' de la conduite 6. Ce dispositif de réglage de débit 13 se présente sous la forme d'un cylindre 54 muni d'une ouverture traversante 55, dont l'une des extrémités est ouverte et dont l'autre extrémité se prolonge par une embase 56 qui est munie de moyens permettant sa fixation étanche dans l'orifice de positionnement 52, avec une possibilité de réglage en rotation. L'ouverture 55 consiste ici en deux orifices circulaires, ménagés en correspondance dans la paroi du cylindre 54, sur un diamètre de ce dernier.

L'embase 56 comporte une collerette circulaire 57 destinée à venir prendre appui sur la face de dessus du corps d'alimentation 5. Cette collerette d'appui 57 est surmontée d'une tête 58 munie d'une empreinte de manoeuvre 59, ici en forme de rainure transversale. Sous la collerette 57, l'embase 56 comporte un joint annulaire 60 pour assurer l'étanchéité avec le pourtour de l'orifice 52.

L'embase 56 comporte encore des moyens qui sont destinés à coopérer avec des moyens complémentaires ménagés sur la bordure de l'orifice 52 pour autoriser la manoeuvre en rotation du dispositif 13, afin de permettre un réglage du débit de l'eau dans la conduite interne 6 (en fonction du positionnement de l'ouverture traversante 55 par rapport à l'axe de ladite conduite 6), tout en empêchant son extraction. Ces moyens sont constitués de deux ergots 60a ménagés sous la collerette 57, qui sont destinés à venir se loger dans une rainure circulaire 52a ménagée sur le pourtour de l'orifice 52, après passage au travers de deux réservations ou encoches 52b. La plage de rotation possible du dispositif de réglage de débit est limitée (pour que lesdits ergots 60a ne puissent pas revenir en correspondance avec lesdites encoches 52b) au moyen d'un clip 57' ménagé latéralement sur la collerette 57 et venant coopérer avec une empreinte 52c de forme adaptée, ménagée sur la face de dessus 24 du corps 5, sur le pourtour de l'orifice 52.

Lorsque le dispositif de réglage 13 est en place dans son orifice de positionnement 52, le cylindre 54 traverse totalement la conduite 6 et son extrémité inférieure libre vient en appui contre un siège plan 61.

Le diamètre du cylindre 54 est supérieur au diamètre de la conduite 6 à ce niveau et l'eau ne peut passer que par l'ouverture 55 pour rejoindre le dispositif de manoeuvre 11.

On peut donc régler à volonté le débit d'eau dans la conduite 6 entre :
- une position de fermeture de débit, dans laquelle la paroi du cylindre 54 obture totalement la conduite 6, et
- une position d'ouverture maximale dans laquelle l'ouverture 55 est en correspondance avec la conduite 6 (dans cette position, l'axe de l'ouverture 55 est centré sur l'axe de la conduite 6).

Ce réglage de débit est donc très simple à réaliser, sans outil (ou à l'aide d'un simple tournevis si nécessaire).

De plus, en position de fermeture, il autorise les opérations d'entretien, de nettoyage et/ou de remplacement de l'organe de filtration 12 et/ou de l'une ou l'autre des pièces du dispositif de manoeuvre 11. Ces opérations peuvent donc être réalisées sans avoir besoin de couper l'alimentation générale en eau, ou sans avoir besoin d'installer une vanne complémentaire par abreuvoir, et donc sans conséquence sur les autres abreuvoirs montés en série.

Sur les figures 1 à 4, on remarque encore la présence d'une bordure en saillie 62 ménagée autour des têtes saillantes 45 et 58 de l'organe de filtration 12 et du dispositif de réglage de débit 13. Cette bordure saillante 62 s'étend sur au moins une partie de la hauteur desdites têtes saillantes 45 et 58 et elle les entoure au moins partiellement, de manière à limiter leur accessibilité par les animaux (pour limiter les risques de détérioration ou de déréglage).

Ici, la bordure 62 s'étend sur l'avant et sur les côtés des têtes saillantes 45, 58.

Pour son maintien, le corps d'alimentation 5 est positionné dans un orifice ménagé dans la paroi arrière 63 du bol d'abreuvoir 2. Il est solidarisé avec ce dernier au moyen de deux systèmes vis-écrou 64 qui viennent se loger dans des orifices en correspondance ménagés dans le corps d'alimentation 5 et au travers du rebord 65 du bol 2.

Le dispositif de raccordement 9 est monté à l'arrière du corps d'alimentation 5 après que ce dernier ait été positionné dans l'orifice du bol d'abreuvoir 2. L'ensemble du mécanisme d'alimentation 4 peut être déposé ou remonté alors que le bol 2 reste fixé sur son support.

## Revendications

1. Abreuvoir pour bétail, comprenant un bol (2) muni de moyens de fixation (3) sur un support et de moyens (4) pour assurer son alimentation en eau, lesquels moyens d'alimentation (6) en eau (4) comprennent un corps (5) définissant une conduite interne d'alimentation, lequel corps (5) est équipé, au niveau de son extrémité arrière (5'), d'un dispositif (9) de raccordement à une tubulure d'amenée d'eau (10), et au niveau de son extrémité avant (5") d'un dispositif de manoeuvre (11), et lesquels moyens d'alimentation en eau (4) comportent encore un organe de filtration (12) ménagé en amont dudit dispositif de manoeuvre (11), pour éviter que les impuretés indésirables atteignent ce dernier, **caractérisé en ce que** ledit corps d'alimentation (5) comporte un orifice (40) dont l'axe (41) s'étend perpendiculairement à l'axe (6') de la conduite interne (6), lequel orifice (40) débouche extérieurement et s'étend jusqu'à ladite conduite interne (6), ledit organe de filtration (12) étant placé dans l'encombrement de la section de ladite conduite interne (6) et comportant une embase support (43) positionnée au travers dudit orifice (40) et maintenue dans ce dernier, ladite embase support (43) comportant une tête (45) équipée d'une empreinte de manoeuvre (46).

2. Abreuvoir selon la revendication 1, **caractérisé en ce que** l'orifice (40) de positionnement de l'organe de filtration (12) débouche au niveau de la partie supérieure du corps d'alimentation (5).

3. Abreuvoir selon la revendication 2, **caractérisé en ce qu'**il comporte un corps d'alimentation (5) de section générale rectangulaire, muni de deux faces latérales (23), d'une face de dessus (24) et d'une face de dessous (25), l'orifice (40) de positionnement de l'organe de filtration (12) débouchant au niveau de ladite face de dessus (24) du corps d'alimentation (5).

4. Abreuvoir selon l'une quelconque des revendications 1 à 3, **caractérisé en ce que** l'organe de filtration (12) comporte un cylindre filtrant (12') dont l'axe s'étend perpendiculairement à l'axe (6') de la conduite interne (6) et dont le diamètre est supérieur au diamètre de ladite conduite interne (6), ledit cylindre filtrant (12') étant muni d'une pluralité d'orifices ou de perforations (42).

5. Abreuvoir selon l'une quelconque des revendications 1 à 4, **caractérisé en ce que** l'organe de filtration (12) est réalisé monobloc avec son embase (43), laquelle embase (43) est munie d'un moyen de fixation étanche dans l'orifice de positionnement (40).

6. Abreuvoir selon la revendication 5, **caractérisé en ce que** l'embase (43) de l'organe de filtration (12) est munie d'une collerette d'appui (44) surmontée par la tête (45) équipée de l'empreinte de manoeuvre (46), laquelle embase (43) est associée à un joint d'étanchéité annulaire (49) ménagé sous ladite collerette d'appui (44), et un filetage (47) pour son vissage dans l'orifice de positionnement (40) muni d'un filetage complémentaire (48).

7. Abreuvoir selon l'une quelconque des revendications 1 à 6, **caractérisé en ce qu'**il comporte un dispositif de réglage de débit (13) positionné dans la conduite interne (6) du corps d'alimentation (5), en amont de l'organe de filtration (12).

8. Abreuvoir selon la revendication 7, **caractérisé en ce que** le dispositif de réglage de débit (13) est positionné au travers d'un orifice (52) ménagé dans le corps d'alimentation (5), lequel orifice (52) comporte un axe (53) qui s'étend perpendiculairement à l'axe (6') de la conduite interne d'alimentation (6), et lequel orifice (52) débouche extérieurement au niveau de la partie supérieure dudit corps d'alimentation (5), en amont de l'orifice (40) de réception de l'organe de filtration (12), et s'étend jusqu'à ladite conduite interne (6), lequel dispositif de réglage de débit (13) consiste en un cylindre (54) - dont l'axe s'étend perpendiculairement à l'axe (6') de ladite conduite interne (6), et - qui est muni d'au moins une ouverture (55), lequel cylindre (54) est porté par une embase (56) réalisée monobloc, comportant une collerette d'appui (57) surmontée par une tête (58) munie d'une empreinte de manoeuvre (59), laquelle embase (56) comporte encore des moyens permettant sa fixation étanche dans ledit orifice (52), tout en autorisant son démontage et le réglage en orientation de ladite ouverture (55), pour assurer un réglage du débit d'eau au niveau de ladite conduite interne (6), entre deux positions de fin de course : l'une de débit maximum et l'autre de fermeture de débit.

9. Abreuvoir selon la revendication 6 et éventuellement selon la revendication 8, **caractérisé en ce que** la tête (45) de l'organe de filtration (12) et éventuellement la tête (58) du dispositif de réglage de débit (13) s'étendent en saillie sur le dessus du corps d'alimentation (5), la face de dessus (24) de ce dernier comportant une bordure en saillie (62) entourant au moins partiellement ladite ou lesdites têtes (45, 58), en particulier pour limiter les risques de détérioration ou de déréglage par les animaux.
